# EUROPEAN PATENT APPLICATION

(11) **EP 4 804 435 A1**
(43) Date of publication of application: **09.09.2026**
(21) Application number: 24892808.7
(22) Date of filing: 01.07.2024
(51) Int. Cl.: H04L 1/00

(54) **INFORMATION TRANSMISSION METHOD AND APPARATUS, COMMUNICATION NODE AND STORAGE MEDIUM**

(30) Priority: 23.11.2023 CN 202311589123
(71) Applicant: ZTE Corporation, Shenzhen, Guangdong 518057 (CN)
(72) Inventor: LIU, Hanchao, Shenzhen, Guangdong 518057 (CN); XIE, Feng, Shenzhen, Guangdong 518057 (CN); WANG, Fei, Shenzhen, Guangdong 518057 (CN)
(74) Representative: Aipex B.V.
(86) International application number: PCT/CN2024/102844
(87) International publication number: WO 2025/107643

(57) **Abstract**

Provided are an information transmission method and apparatus, a communication node, and a storage medium. The method includes receiving configuration information of a modulation and coding scheme (MCS) table set sent by a wireless network node, where the MCS table set is generated by the wireless network node; and configuring the MCS table set according to the configuration information. The wireless network node adaptively generates the MCS table set and sends configuration information of the MCS table set to the wireless device, and the wireless device can configure the MCS table set according to the configuration information, so that the spectral efficiency of data transmission between the wireless network node and the wireless device is optimized, thereby improving the utilization of spectrum resources.

## Description

### TECHNICAL FIELD

The present application relates to the field of wireless communication technologies, and in particular to an information transmission method and apparatus, a communication node, and a storage medium.

### BACKGROUND

In wireless communication technologies, data is transmitted in the form of bits between a wireless network node and a wireless device. The bits require channel coding and modulation processing before converted into complex-valued modulation symbols.

Channel coding is used to ensure correct demodulation of transmitted information to the greatest extent. The coded bits consist of information bits and check bits. The proportion of information bits in the coded bits is considered the code rate. The higher the code rate, the more information is contained in a unit length of the coded bits, but the lower the probability of correct demodulation; conversely, the lower the code rate, the less information is contained in a unit length of the coded bits, but the higher the probability of correct demodulation. After channel coding, modulation processing is required. Modulation processing is used to convert bits into complex-valued modulation symbols. The number of bits corresponding to one modulation symbol is considered the modulation order. The higher the modulation order, the more information each modulation symbol carries, and the more information can be carried per unit frequency-domain resource, resulting in higher spectral efficiency, but a lower probability of correct demodulation; conversely, the lower the modulation order, the less information each modulation symbol carries, and the less information can be carried per unit frequency-domain resource, resulting in lower spectral efficiency, but a higher probability of correct demodulation.

The modulation order and target code rate of data are artificially quantized into discrete values, referred to as a modulation and coding scheme (MCS). These quantized modulation order and target code rate are fixed and not configurable, making it impossible to ensure optimal spectral efficiency and resulting in a waste of spectrum resources.

### SUMMARY

The present application provides an information transmission method and apparatus, a communication node, and a storage medium to solve the problem of resource waste caused by the inability to ensure the optimal spectral efficiency when MCS tables are fixed and not configurable.

To achieve this object, embodiments of the present application provide an information transmission method. The method is applied to a wireless device and includes receiving configuration information of a modulation and coding scheme (MCS) table set sent by a wireless network node, where the MCS table set is generated by the wireless network node; and configuring the MCS table set according to the configuration information.

To achieve this object, embodiments of the present application provide an information transmission method. The method is applied to a wireless network node and includes sending configuration information of a modulation and coding scheme (MCS) table set to a wireless device to enable the wireless device to configure the MCS table set according to the configuration information, where the wireless network node generates the MCS table set.

To achieve this object, embodiments of the present application provide an information transmission apparatus. The apparatus is applied to a wireless device and includes a receiving module and a configuration module.

The receiving module is configured to receive configuration information of a modulation and coding scheme (MCS) table set sent by a wireless network node, where the MCS table set is generated by the wireless network node.

The configuration module is configured to configure the MCS table set according to the configuration information.

To achieve this object, embodiments of the present application provide an information transmission apparatus. The apparatus is applied to a wireless network node and includes a sending module.

The sending module is configured to send configuration information of a modulation and coding scheme (MCS) table set to enable the wireless device to configure the MCS table set according to the configuration information, where the wireless network node generates the MCS table set.

To achieve this object, embodiments of the present application provide a communication node. The communication node includes a memory, a processor, a program stored in the memory and executable on the processor, and a data bus for implementation of connection and communication between the processor and the memory. When executed by the processor, the program causes the processor to perform the information transmission method of any embodiment of the present application.

To achieve this object, embodiments of the present application provide a storage medium for computer-readable storage. The storage medium stores at least one program executable by at least one processor to cause the at least one processor to perform the information transmission method of any embodiment of the present application.

According to the information transmission method and apparatus, communication node, and storage medium of embodiments of the present application, the wireless network node adaptively generates the MCS table set and sends configuration information of the MCS table set to the wireless device, and the wireless device can configure the MCS table set according to the configuration information, so that the spectral efficiency of data transmission between the wireless network node and the wireless device is optimized, thereby improving the utilization of spectrum resources.

The preceding embodiments and other aspects of the present application and implementations thereof are described in more detail in the brief description of drawings, detailed description, and claims.

### BRIEF DESCRIPTION OF DRAWINGS

FIG. 1 is a flowchart of an information transmission method according to an embodiment.
FIG. 2 is a flowchart of an information transmission method according to an embodiment.
FIG. 3 is an example flowchart of information transmission according to an embodiment.
FIG. 4 is a diagram illustrating the structure of an information transmission apparatus according to an embodiment.
FIG. 5 is a diagram illustrating the structure of an information transmission apparatus according to an embodiment.
FIG. 6 is a diagram illustrating the structure of a communication node according to an embodiment.

### DETAILED DESCRIPTION

To make the objects, technical solutions, and advantages of the present application clearer, embodiments of the present application are described in detail below in conjunction with the drawings. It is to be noted that if not in collision, embodiments of the present application and features therein may be combined with each other in any manner.

In existing wireless communication technologies, the modulation order and target code rate are quantized into multiple discrete levels. Each level corresponds to one quantized modulation order and one quantized target code rate. Each level corresponds to a combination of one quantized modulation order and one quantized target code rate, which is referred to as an MCS. Each level corresponds to one index, which is considered an MCS index. A set containing multiple MCSs is referred to as an MCS table. Different MCS tables may have different maximum modulation orders and target code rates. Different MCS tables may have different minimum modulation orders and target code rates. Different MCS tables may include different numbers of levels. The differences between levels in different MCS tables may vary. Each radio access technology (RAT) corresponds to one MCS table set. One set may include one or more MCS tables. In existing methods, the MCS table set is fixed, that is, the number of MCS tables in the set is fixed, and each MCS table in the set is fixed. Further, each combination of quantized modulation order and quantized target code rate in the MCS table is fixed. Only when the RAT standard protocol is updated, can the MCS table or the MCS table set be updated. However, during the use of a mobile network by a user, each MCS table remains fixed. Therefore, when the air interface wireless channel does not match well with the MCS table, the fixed MCS table cannot ensure optimal spectral efficiency of data transmission between the wireless network node and the wireless device.

To solve this problem, the present application provides an information transmission method to effectively improve the spectral efficiency of data transmission between a wireless network node and a wireless device, thereby saving spectrum resources.

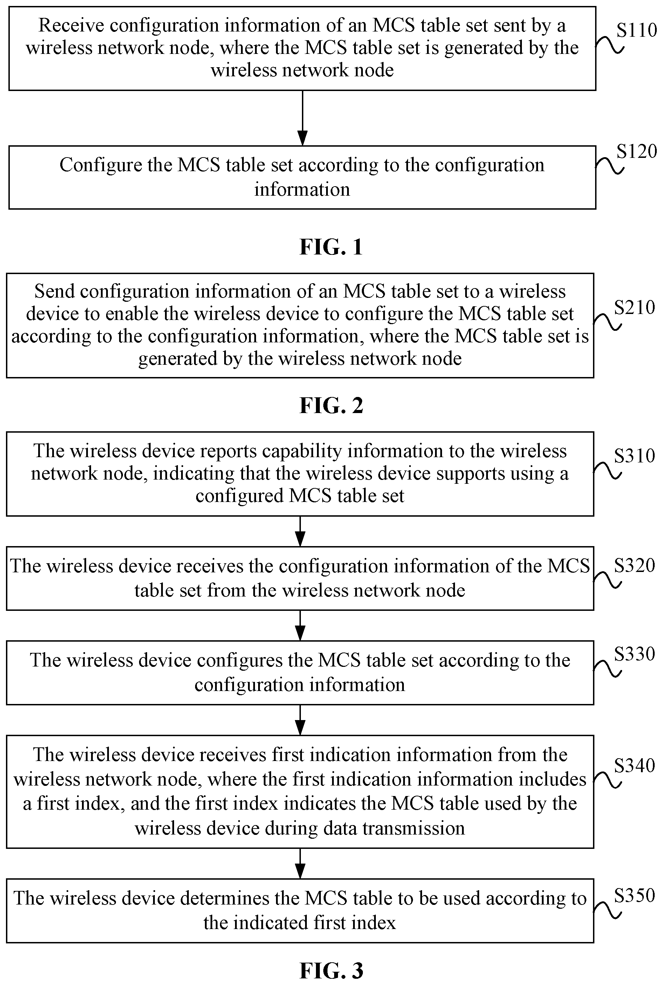

FIG. 1 is a flowchart of an information transmission method according to an embodiment. As shown in FIG. 1, the information transmission method of this embodiment of the present application is applied to a wireless device and includes S110 and S120.

In S110, configuration information of a modulation and coding scheme (MCS) table set sent by a wireless network node is received, where the MCS table set is generated by the wireless network node.

In this embodiment, the configuration information of the MCS table set includes quantized modulation orders and quantized target code rates corresponding to all levels in each MCS table included in the MCS table set.

The wireless network node can adaptively generate the MCS table set and send the configuration information of the generated MCS table set to the wireless device. The wireless device may receive the configuration information of the MCS table set sent by the wireless network node. The wireless network node may adaptively generate the MCS table set according to information such as channel information between the wireless network node and the wireless device, the communication scenario, the capability information of the wireless device. The MCS table set may include different combinations of quantized modulation orders and quantized target code rates to adapt to data transmission under different conditions.

In S120, the MCS table set is configured according to the configuration information.

After receiving the configuration information, the wireless device configures the MCS table set according to the configuration information. After configuring the MCS table set, the wireless device can perform data transmission according to the MCS table set, that is, the wireless device can select an appropriate MCS table from the configured MCS table set for data transmission.

In the information transmission method of this embodiment of the present application, the wireless device can receive the configuration information of the MCS table set sent by the wireless network node. The MCS table set is adaptively generated by the wireless network node. The wireless device can configure the MCS table set according to the configuration information and perform data transmission according to the configured MCS table set. Data transmission between the wireless network node and the wireless device is performed according to the adaptively generated MCS table set so that the spectral efficiency of data transmission between the wireless network node and the wireless device can be optimized, thereby improving the utilization of spectrum resources.

In an embodiment, the method also includes reporting capability information to the wireless network node, where the capability information indicates whether the wireless device supports using the MCS table set configured by the wireless network node.

In this embodiment, the capability information indicates whether the wireless device supports using the MCS table set configured by the wireless network node, that is, indicates the capability of the wireless device to use the MCS table set configured by the wireless network node, including information indicating whether the wireless device supports using the MCS table set configured by the wireless network node.

The wireless device determines the capability information according to its own software and hardware information. If the wireless device supports using the MCS table set configured by the wireless network node, the capability information carries information indicating that the wireless device supports using the MCS table set configured by the wireless network node. If the wireless device does not support using the MCS table set configured by the wireless network node, the capability information carries information indicating that the wireless device does not support using the MCS table set configured by the wireless network node. This step may be performed before receiving the configuration information of the MCS table set sent by the wireless network node. If the capability information indicates that the wireless device does not support using the MCS table set configured by the wireless network node, the wireless network node may not send the configuration information of the MCS table set to the wireless device, and the wireless network node and the wireless device use a default MCS table set, that is, a preconfigured fixed MCS table set, for example, an MCS table set defined in the 5G standard specifications. If the capability information indicates that the wireless device supports using the MCS table set configured by the wireless network node, the wireless network node sends the configuration information of the MCS table set to the wireless device, and the wireless network node and the wireless device perform data transmission using the configured MCS table set.

In an embodiment, receiving the configuration information of the MCS table set sent by the wireless network node includes receiving, via Layer 3 signaling, the configuration information of the MCS table set sent by the wireless network node.

The wireless network node may carry the configuration information of the MCS table set in Layer 3 signaling, that is, L3 signaling, and send the configuration information of the MCS table set to the wireless device via the L3 signaling. The wireless device may receive the configuration information of the MCS table set via the Layer 3 signaling. The L3 signaling includes different types of information. The wireless network node may carry the configuration information of the MCS table set in one or more types of information according to actual service requirements and the communication connection condition with the wireless device and send the configuration information of the MCS table set to the wireless device so that the wireless device can configure the MCS table set. The wireless device uses the most recently configured MCS table set until a new MCS table set is configured.

In an embodiment, the method also includes receiving first indication information sent by the wireless network node, where the first indication information includes a first index, and the first index indicates an MCS table used by the wireless device during data transmission.

In this embodiment, the first indication information may be understood as information indicating which MCS table is to be used by the wireless device in data transmission; and the first index may be understood as the index of an MCS table to identify the MCS table. The MCS table set includes one or more MCS tables. Each MCS table has a unique index.

Which MCS table in the MCS table set is used by the wireless device may be specified by the wireless network node. The wireless network node may also configure the index of each MCS table in the MCS table set for the wireless device. The wireless network node may select the index of one MCS table from the MCS table set as the first index or randomly select the index of one MCS table as the first index, generate the first indication information according to the first index, carry the first index in the first indication information, and send the first indication information to the wireless device so that the wireless device can determine which MCS table is to be used for data transmission after receiving the first indication information.

The wireless device may use an MCS table from the MCS table set for data transmission; however, at most one MCS table can be used at the same time. That is, the MCS used for one data transmission can only be selected from a single MCS table. The wireless network node indicates one MCS table from the MCS table set to the wireless device for data transmission. The MCS table may be an MCS table for uplink data transmission, an MCS table for downlink data transmission, or an MCS table for sidelink data transmission. The first indication information may be transmitted via Layer 3 signaling.

In an embodiment, the method also includes receiving downlink control signaling sent by the wireless network node, where the downlink control signaling includes a second index, and the second index indicates a level in an MCS table used by the wireless device during data transmission.

In this embodiment, the downlink control signaling is downlink control information (DCI). The second index may be understood as the index of each level in the MCS table to identify combinations of quantized modulation orders and quantized target code rates corresponding to different levels in the MCS table. The MCS table includes combinations of quantized modulation orders and quantized target code rates corresponding to one or more levels. Each combination has a unique identifier.

When the wireless device is required to perform data transmission, it receives the downlink control signaling sent by the wireless network node. The downlink control signaling includes the second index that indicates a level in the MCS table used for data transmission, that is, the modulation order and the target code rate. The second index corresponds to a combination of a quantized modulation order and a quantized target code rate in the MCS table currently used by the wireless device, and the modulation order and the target code rate in the combination are used for encoding and modulation of data to be transmitted. The data transmission includes, but is not limited to, uplink data transmission, downlink data transmission, and sidelink data transmission. The MCS table set may be determined according to air interface wireless channel information or a communication application scenario. The wireless device and the wireless network node perform data transmission using the indicated modulation order and the indicated target code rate.

In the information transmission method of this embodiment of the present application, the wireless network node adaptively generates the MCS table set according to the wireless channel information and configures the MCS table set for the wireless device via the Layer 3 signaling. The wireless device configures the MCS table set according to the configuration information, receives the first indication information and the downlink control signaling from the wireless network node, and selects, from the configured MCS table set, a matching combination of quantized modulation order and quantized target code rate for data transmission. The combination of quantized modulation order and target code rate in the MCS table can highly match the wireless channel so that spectral efficiency is optimized and the utilization of spectrum resources is improved.

FIG. 2 is a flowchart of an information transmission method according to an embodiment. As shown in FIG. 2, the information transmission method of this embodiment of the present application is applied to a wireless network node and includes S210.

In S210, configuration information of a modulation and coding scheme (MCS) table set is sent to a wireless device to enable the wireless device to configure the MCS table set according to the configuration information, where the wireless network node generates the MCS table set.

In this embodiment, the configuration information of the MCS table set includes quantized modulation orders and quantized target code rates corresponding to all levels in each MCS table included in the MCS table set.

The wireless network node may adaptively generate the MCS table set according to information such as channel information between the wireless network node and the wireless device, the communication scenario, the capability information of the wireless device. The MCS table set may include different combinations of quantized modulation orders and quantized target code rates to adapt to data transmission under different conditions. The wireless network node sends the configuration information of the MCS table set to the wireless device so that after receiving the configuration information, the wireless device can configure the MCS table set according to the configuration information. After configuring the MCS table set, the wireless device can perform data transmission according to the MCS table set. When generating the MCS table set, the wireless network node may generate a corresponding MCS table set for each wireless device communicating therewith and send the corresponding configuration information of the MCS table set to each wireless device.

In the information transmission method of this embodiment of the present application, the wireless network node adaptively generates the MCS table set and sends configuration information of the MCS table set to the wireless device. The wireless device can configure the MCS table set according to the configuration information and perform data transmission according to the configured MCS table set. Data transmission between the wireless network node and the wireless device is performed according to the adaptively generated MCS table set so that the spectral efficiency of data transmission between the wireless network node and the wireless device can be optimized, thereby improving the utilization of spectrum resources.

In an embodiment, generating the MCS table set includes generating the MCS table set according to air interface wireless channel information.

The MCS table set includes at least one MCS table. Each MCS table includes at least one level of quantized modulation order and quantized target code rate.

In this embodiment, the air interface wireless channel information refers to the air interface wireless channel information for information transmission between the wireless network node and the wireless device and can reflect the quality of the air interface wireless channel and channel-related information between the wireless network node and the wireless device.

The wireless network node communicates with the wireless device, acquires the air interface wireless channel information between them, and generates the MCS table set according to the air interface wireless channel information. There may be multiple ways to generate the MCS table set according to the air interface wireless channel information. For example, different MCS table sets may be preconfigured, and the MCS table set corresponding to the air interface wireless channel information may be predicted by a neural network model; alternatively, the air interface wireless channel information may be predicted and processed through a neural network model to generate different MCS tables and form an MCS table set; alternatively, different MCS tables may be generated according to algorithms or predefined rules to form an MCS table set, and the like.

In this embodiment, the MCS table set may include one or more MCS tables, and each MCS table includes quantized modulation orders and quantized target code rates corresponding to one or more levels. The wireless device may use the quantized modulation order and the quantized target code rate corresponding to any level in the MCS table for data transmission. Each MCS table and each level in the MCS table may be adaptively configured, that is, the quantized values of the modulation order and the target code rate may be adaptively configured.

In an embodiment, the MCS table set includes at least one of the following: an uplink MCS table set; a downlink MCS table set; or a sidelink MCS table set.

The uplink MCS table set is determined according to uplink channel state indication information and wireless channel estimation. The downlink MCS table set is determined according to downlink channel state indication information and wireless channel estimation. The sidelink MCS table set is determined according to sidelink channel state indication information and wireless channel estimation.

In an embodiment, generating the MCS table set includes generating the MCS table set according to a communication application scenario.

The MCS table set includes at least one MCS table. Each MCS table includes at least one level of quantized modulation order and quantized target code rate.

In this embodiment, the communication application scenario refers to an application scenario in which the wireless device performs data transmission. When generating the MCS table set, different communication application scenarios are considered. For each communication application scenario, a corresponding MCS table set is generated according to the requirements of the communication application scenario. Each communication application scenario may correspond to one or more MCS table sets.

In an embodiment, generating the MCS table set includes generating the MCS table set according to a communication application scenario and air interface wireless channel information.

The MCS table set includes at least one MCS table. Each MCS table includes at least one level of quantized modulation order and quantized target code rate.

In this embodiment, both the communication application scenario and the air interface wireless channel information are considered in generating a corresponding MCS table set. Each communication application scenario may generate a corresponding MCS table set according to different air interface wireless channel information, that is, the communication application scenario and the air interface wireless channel information may be freely combined in generating the MCS table set. The number of types of the MCS table set is N, where N = the number of communication application scenarios × the number of types of air interface wireless channel information.

In related technologies, during the use of the mobile network by the wireless device, each MCS table is fixed. Therefore, when the MCS table cannot match the wireless channel, the spectral efficiency of data transmission between the wireless network node and the wireless device cannot be optimal. That is, when the quantized modulation order and quantized target code rate in the MCS table cannot match the wireless channel, the spectral efficiency of data transmission between the wireless network node and the wireless device is not optimal. In other words, the optimal modulation order and target code rate corresponding to the wireless channel do not exactly fall on a level (that is, the combination of quantized modulation order and quantized target code rate) in the MCS table, but rather fall between two levels. However, the wireless network node and the wireless device can only select the quantized values of the modulation order and the target code rate corresponding to a level, preventing the spectral efficiency from being optimal.

In this embodiment, the wireless network node generates an MCS table set and all MCS tables in the set according to the air interface wireless channel information between the wireless network node and the wireless device. The MCS table set is not fixed but configurable. Further, the wireless network device generates, according to the wireless channel, a combination of quantized modulation order and quantized target code rate, or a quantized modulation order, or a quantized target code rate, in the MCS table. The combination of quantized modulation order and quantized target code rate in the MCS table is configurable, thereby ensuring the optimal spectral efficiency.

In an embodiment, generating the MCS table set according to the communication application scenario and the air interface wireless channel information includes inputting vectors corresponding to the communication application scenario and the air interface wireless channel information into a deep neural network, where the deep neural network outputs probabilities of multiple candidate MCS table sets; and comparing the probabilities of the candidate MCS table sets and selecting the MCS table set with the highest probability as the MCS table set configured for the wireless device.

In this embodiment, the deep neural network model may be pre-trained. Training samples for the deep neural network model are acquired in advance. The training sample includes the communication application scenario, air interface wireless channel information, and the association probability between the two and each candidate MCS table set. The deep neural network is trained according to the training samples to form a deep neural network that meets requirements. The deep neural network may perform prediction according to each communication application scenario. The deep neural network may perform prediction according to each type of air interface wireless channel information. The deep neural network model may be jointly trained using multiple communication application scenarios. The deep neural network model may be jointly trained using multiple types of air interface wireless channel information.

A vector corresponding to the air interface wireless channel information is determined. The vector corresponding to the air interface wireless channel information may be converted by the wireless network node according to the air interface wireless channel information or may be converted by the wireless device and transmitted to the wireless network node. Vectors corresponding to the communication application scenario and the air interface wireless channel information are input into the deep neural network. The deep neural network performs prediction according to knowledge learned during training to determine, for each candidate MCS table set, the probability that the communication application scenario and the air interface wireless channel information match the candidate MCS table set. The candidate MCS table set may be preconfigured. Typically, multiple candidate MCS table sets are preconfigured.

The probabilities of the multiple candidate MCS table sets are compared to determine the MCS table set with the highest probability as the MCS table set configured for the wireless device.

In this embodiment, the probabilities may also be ranked, and a preset number of MCS table sets may be selected in descending order of probability and used as the MCS table sets configured for the wireless device. In this manner, multiple MCS table sets with the highest probabilities may be selected and configured for the wireless device, that is, the wireless device may be configured with multiple MCS table sets.

When each MCS table set is generated according to a communication application scenario and air interface wireless channel information, one MCS table set may be generated for one combination of communication application scenario and air interface wireless channel information and configured for the wireless device. When an MCS table set is configured for the wireless device, the MCS table set may be selected according to the current communication application scenario and air interface wireless channel information of the wireless device, and the configuration information is transmitted to the wireless device so that the wireless device can perform configuration.

In an embodiment, the communication application scenario includes at least one of enhanced mobile broadband (eMBB); ultra-reliable low latency communications (URLLC); or massive machine-type communications (mMTC).

In an embodiment, the air interface wireless channel information includes at least one of channel state indication (CSI) information or wireless channel estimation.

In this embodiment, the CSI may be uplink CSI, downlink CSI, or sidelink CSI.

The wireless network node may acquire CSI by receiving downlink CSI fed back by the wireless device or by receiving uplink reference signals (for example, a sounding reference signal (SRS)) to measure the uplink wireless channel. The wireless network node acquires the state of the downlink wireless channel according to the downlink CSI fed back by the wireless device; alternatively, the wireless network node may estimate the uplink wireless channel by receiving the SRS transmitted by the wireless device, thereby acquiring the state of the uplink wireless channel.

In an example in which the communication application scenarios include eMBB, URLLC, and mMTC, and the CSI includes uplink CSI, downlink CSI, and sidelink CSI, each communication application scenario may correspond to three types of MCS table sets, including an uplink MCS table set, a downlink MCS table set, and a sidelink MCS table set, resulting in a total of nine types of MCS table sets.

In an embodiment, the method also includes receiving capability information reported by the wireless device, where the capability information indicates whether the wireless device supports using the MCS table set configured by the wireless network node.

The wireless device determines the capability information according to its own software and hardware information. If the wireless device supports using the MCS table set configured by the wireless network node, the capability information carries information indicating that the wireless device supports using the MCS table set configured by the wireless network node. If the wireless device does not support using the MCS table set configured by the wireless network node, the capability information carries information indicating that the wireless device does not support using the MCS table set configured by the wireless network node. This step may be performed before sending the configuration information of the MCS table set to the wireless device. If the capability information indicates that the wireless device does not support using the MCS table set configured by the wireless network node, the wireless network node may not send the configuration information of the MCS table set to the wireless device, and the wireless network node and the wireless device use a default MCS table set, that is, a preconfigured fixed MCS table set (for example, an MCS table set defined in the 5G standard specifications). If the capability information indicates that the wireless device supports using the MCS table set configured by the wireless network node, the wireless network node sends the configuration information of the MCS table set to the wireless device, and the wireless network node and the wireless device perform data transmission using the configured MCS table set.

In an embodiment, sending the configuration information of the MCS table set to the wireless device includes sending the configuration information of the MCS table set to the wireless device via Layer 3 signaling.

The wireless network node may carry the configuration information of the MCS table set in Layer 3 signaling, that is, L3 signaling, and send the configuration information of the MCS table set to the wireless device via the L3 signaling. The L3 signaling includes different types of information. The wireless network node may carry the configuration information of the MCS table set in one or more types of information according to actual service requirements and the communication connection condition with the wireless device and send the configuration information of the MCS table set to the wireless device so that the wireless device can configure the MCS table set. The wireless device uses the most recently configured MCS table set until a new MCS table set is configured.

In an embodiment, the method also includes sending first indication information to the wireless device, where the first indication information includes a first index, and the first index indicates an MCS table used by the wireless device during data transmission.

The wireless network node may also configure the index of each MCS table in the MCS table set for the wireless device. After sending the configuration information of the MCS table set to the wireless device, the wireless network node may select the index of one MCS table from the MCS table set as the first index according to information including the state of the wireless channel, the communication application scenario, the software and hardware information of the wireless device; or may randomly select the index of one MCS table as the first index. The wireless network node generates the first indication information according to the first index, carries the first index in the first indication information, and sends the first indication information to the wireless device so that the wireless device can determine which MCS table is to be used for data transmission after receiving the first indication information.

The wireless device may use an MCS table from the MCS table set for data transmission; however, at most one MCS table can be used at the same time. That is, the MCS used for one data transmission can only be selected from one MCS table. The wireless network node indicates one MCS table from the MCS table set to the wireless device for data transmission. The MCS table may be an MCS table for uplink data transmission, an MCS table for downlink data transmission, or an MCS table for sidelink data transmission. The first indication information may be transmitted via Layer 3 signaling.

In an embodiment, the method also includes sending downlink control signaling to the wireless device, where the downlink control signaling includes a second index, and the second index indicates a level in an MCS table used by the wireless device during data transmission.

When there is data to be transmitted, the wireless network node sends the downlink control signaling to the wireless device to indicate a second index for the wireless device. The modulation order and the target code rate corresponding to the second index are used for the forthcoming data transmission. The second index corresponds to a combination of one quantized modulation order and one quantized target code rate in the MCS table currently used by the wireless device, and the modulation order and the target code rate in the combination are used for encoding and modulation of data to be transmitted. The data transmission includes, but is not limited to, uplink data transmission, downlink data transmission, and sidelink data transmission.

After the wireless device determines the MCS table to be used, when there is data to be transmitted, the wireless device receives the downlink control signaling sent by the wireless network node. The downlink control signaling includes the second index that indicates a level in the MCS table used for data transmission, that is, the modulation order and the target code rate. The wireless device and the wireless network node perform data transmission using the indicated modulation order and the indicated target code rate. The combination of quantized modulation order and quantized target code rate corresponding to the second index is generated according to the air interface wireless channel information.

In the information transmission method of this embodiment of the present application, the wireless network node adaptively generates the MCS table set according to the wireless channel information and configures the MCS table set for the wireless device via the Layer 3 signaling. The wireless device configures the MCS table set according to the configuration information. The wireless device and the wireless network node perform data transmission according to the configured MCS table set. The combination of quantized modulation order and quantized target code rate in the MCS table can highly match the air interface wireless channel so that spectral efficiency is optimized and the utilization of spectrum resources is improved. Moreover, in this embodiment of the present application, one MCS table set may be generated for one combination of communication application scenario and air interface wireless channel information, thereby facilitating the selection of an appropriate MCS table set for a given combination of communication application scenario and air interface wireless channel information, further improving the utilization of spectral resources, and avoiding a waste of spectrum resources.

The information transmission process is described using the following embodiments:

### Embodiment one

After the wireless device is connected to the wireless network node, the wireless network node generates an MCS table set according to the air interface wireless channel information between the wireless network node and the wireless device. That is, the wireless network node generates all MCS tables in the set according to the air interface wireless channel information. Further, for each MCS table, the wireless network node generates, according to the wireless channel information, a combination of quantized modulation order and quantized target code rate corresponding to each level in the table, that is, the quantized modulation order and the quantized target code rate corresponding to each level.

The air interface wireless channel information includes, but is not limited to, channel state indication (CSI) information and wireless channel estimation. The CSI includes uplink CSI, downlink CSI, and sidelink CSI. The wireless network node may acquire CSI by receiving downlink CSI fed back by the wireless device or by receiving reference signals (for example, an SRS) to measure the uplink wireless channel. The wireless network node acquires the state of the downlink wireless channel according to the downlink CSI fed back by the wireless device. The wireless network node estimates the uplink wireless channel by receiving the SRS transmitted by the wireless device, thereby acquiring the state of the uplink wireless channel. The wireless network node may generate the MCS table set according to statistical information of the air interface wireless channel over a time interval or may generate the MCS table set according to instantaneous information of the wireless channel.

The wireless network node generates an uplink MCS table set according to the uplink wireless channel and generates a downlink MCS table set according to the downlink wireless channel. The wireless network node generates independent MCS table sets for each communication application scenario (for example, eMBB, URLLC, and mMTC). For example, the three communication application scenarios, eMBB, URLLC, and mMTC, correspond to at least nine independent MCS table sets. Each communication application scenario corresponds to at least three sets, that is, an uplink MCS table set, a downlink MCS table set, and a sidelink MCS table set. MCS table sets corresponding to different communication application scenarios may include the same MCS tables.

The wireless device reports capability information to the wireless network node to indicate whether the wireless device supports using the MCS table set configured by the wireless network node. If the capability information indicates that the wireless device supports using the MCS table set configured by the wireless network node, the wireless network node sends the configuration information of the MCS table set to the wireless device, and the wireless device configures the MCS table set according to the configuration information. The wireless network node and the wireless device then use the configured MCS table set. If the capability information indicates that the wireless device does not support using the MCS table set configured by the wireless network node, the wireless network node and the wireless device use a default MCS table set, that is, a preconfigured fixed MCS table set, for example, an MCS table set defined in the 5G standard specifications. The default MCS table set is fixed unless the standard specifications are updated.

When the capability information of the wireless device indicates supporting using the configured MCS table set, the wireless network node sends the configuration information of the MCS table set to the wireless device. The wireless device configures the MCS table set according to the configuration information and uses the configured MCS table set. The wireless device uses the most recently configured MCS table set until a new MCS table set is configured. The wireless network node sends the configuration information of the MCS table set to the wireless device via Layer 3 signaling. The Layer 3 signaling includes, but is not limited to, a radio resource control (RRC) message. The RRC message includes a radio resource control setup message (RRCSetup), or a radio resource control reconfiguration message (RRCReconfiguration), or a reconfiguration with synchronization message (ReconfigurationWithSync), or system information. The system information includes system information block 1 (SIB1). Further, the system information received by the wireless device in an idle state or an inactive state includes the configuration information of the MCS table set, and the RRCSetup message and/or the RRCReconfiguration message received by the wireless device in a connected state includes the configuration information of the MCS table set. During a cell handover process, the ReconfigurationWithSync message received by the wireless device includes the configuration information of the MCS table set. The configuration information of the MCS table set may be modified via higher-layer signaling, including an RRCReconfiguration message.

After the wireless device completes configuration of the MCS table set, the wireless network node sends first indication information to the wireless device to indicate one MCS table in the MCS table set for determining the modulation order and the target code rate of data. The first indication information indicates one MCS table index. The MCS table corresponding to the first index is the indicated MCS table. The wireless device determines the MCS table to be used according to the first index in the indication information. The wireless device uses the most recently indicated MCS table until a new MCS table is indicated. The wireless network node sends the first indication information to the wireless device via Layer 3 signaling. The Layer 3 signaling includes, but is not limited to, an RRC message. The RRC message includes an RRCSetup message, an RRCReconfiguration message, a ReconfigurationWithSync message, or system information. The system information includes SIB1. Further, the system information received by the wireless device in an idle state or an inactive state includes the first indication information, and the RRCSetup message and/or the RRCReconfiguration message received by the wireless device in a connected state includes the first indication information. During a cell handover process, the ReconfigurationWithSync message received by the wireless device includes the first indication information. The first indication information may be modified via higher-layer signaling. The higher-layer signaling includes an RRCReconfiguration message.

After the wireless device is indicated with an MCS table, when data is required to be transmitted, the wireless network node indicates a second index to the wireless device via downlink control signaling (DCI). The second index corresponds to one level in the MCS table, that is, a combination of one quantized modulation order and one quantized target code rate. The wireless device determines the modulation order and the target code rate for the upcoming data transmission according to the second index. The wireless device and the wireless network node perform data transmission according to the determined modulation order and target code rate. The MCS table in this step is the MCS table indicated by the wireless network node from the configured MCS table set to the wireless device for determining the modulation order and the target code rate of data.

FIG. 3 is an example flowchart of information transmission. As shown in FIG. 3, the information transmission process includes the following:
In S310, the wireless device reports capability information to the wireless network node, indicating that the wireless device supports using a configured MCS table set.

In S320, the wireless device receives the configuration information of the MCS table set from the wireless network node.

In S330, the wireless device configures the MCS table set according to the configuration information.

In S340, the wireless device receives first indication information from the wireless network node, where the first indication information includes a first index, and the first index indicates the MCS table used by the wireless device during data transmission.

In S350, the wireless device determines the MCS table to be used according to the indicated first index.

### Embodiment two

The wireless network node determines an MCS table set using artificial intelligence (AI) and determines the configuration information of the MCS table set according to communication application scenario requirements and air interface wireless channel information. A first AI node of the wireless network node models a mapping relationship. The mapping relationship can be used to map the communication scenario requirements and the air interface wireless channel information acquired by the wireless network node to the configuration information of the MCS table set. The communication application scenario includes, but is not limited to, an eMBB scenario, a URLLC scenario, and an mMTC scenario. The air interface wireless channel information includes, but is not limited to, channel state information (CSI); an air interface channel estimation matrix; eigenvalues and eigenvectors of the air interface channel estimation matrix; and singular values, a left singular matrix, and a right singular matrix of the air interface channel estimation matrix.

The first AI node maps the communication application scenario and the uplink air interface wireless channel information to an uplink MCS table set; maps the communication application scenario and the downlink air interface wireless channel information to a downlink MCS table set; and maps the communication application scenario and the sidelink air interface wireless channel information to a sidelink MCS table set.

The first AI node models the mapping relationship using a deep neural network paradigm. The deep neural network includes a feedforward neural network, a convolutional neural network, and a recurrent neural network. The deep neural network includes an input layer, an output layer, and multiple hidden layers (N ≥ 1). The input layer, the output layer, and each hidden layer each include one or more neuron nodes.

The first AI node processes the communication application scenario and the air interface wireless channel information into a D-dimensional vector, where D ≥ 1. The vector is input into the input layer, passes through the N hidden layers, and reaches the output layer. The output layer outputs a probability corresponding to each MCS table set. The wireless network node selects the MCS table set with the highest probability as the MCS table set configured for the wireless device.

A second AI node of the wireless device encodes downlink air interface wireless channel information, including channel state information (CSI); an air interface channel estimation matrix; eigenvalues and eigenvectors of the air interface channel estimation matrix; and singular values, a left singular matrix, and a right singular matrix of the air interface channel estimation matrix; and transmits the encoded information to the first AI node of the wireless network node. The first AI node maps the encoded information to the MCS table set. The second AI node of the wireless device encodes sidelink air interface wireless channel information, including channel state information (CSI); an air interface channel estimation matrix; eigenvalues and eigenvectors of the air interface channel estimation matrix; and singular values, a left singular matrix, and a right singular matrix of the air interface channel estimation matrix; and transmits the encoded information to the first AI node of the wireless network node. The first AI node maps the encoded information to the MCS table set.

The second AI node encodes the air interface wireless channel information using a deep neural network paradigm.

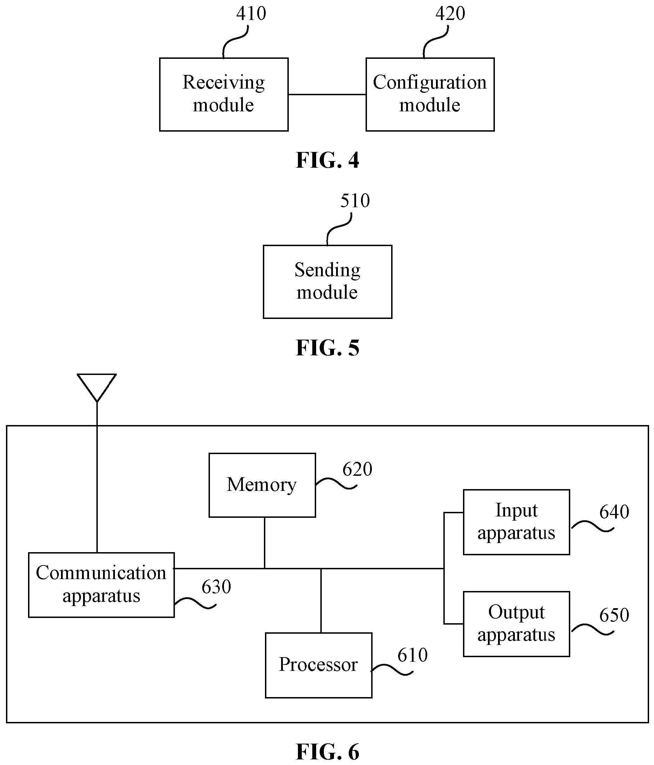

FIG. 4 is a diagram illustrating the structure of an information transmission apparatus according to an embodiment. The apparatus is applied to a wireless device. As shown in FIG. 4, the apparatus includes a receiving module 410 and a configuration module 420.

The receiving module 410 is configured to receive configuration information of a modulation and coding scheme (MCS) table set sent by a wireless network node, where the MCS table set is generated by the wireless network node.

The configuration module 420 is configured to configure the MCS table set according to the configuration information.

In the information transmission apparatus of this embodiment of the present application, the wireless device can receive the configuration information of the MCS table set sent by the wireless network node. The MCS table set is adaptively generated by the wireless network node. The wireless device can configure the MCS table set according to the configuration information and perform data transmission according to the configured MCS table set. Data transmission between the wireless network node and the wireless device is performed according to the adaptively generated MCS table set so that the spectral efficiency of data transmission between the wireless network node and the wireless device can be optimized, thereby improving the utilization of spectrum resources.

In an embodiment, the apparatus also includes a capability information reporting module.

The capability information reporting module is configured to report capability information to the wireless network node, where the capability information indicates whether the wireless device supports using the MCS table set configured by the wireless network node.

In an embodiment, receiving the configuration information of the MCS table set sent by the wireless network node includes receiving, via Layer 3 signaling, the configuration information of the MCS table set sent by the wireless network node.

In an embodiment, the apparatus also includes a first indication information receiving module.

The first indication information receiving module is configured to receive first indication information sent by the wireless network node, where the first indication information includes a first index, and the first index indicates an MCS table used by the wireless device during data transmission.

In an embodiment, the apparatus also includes a downlink control signaling receiving module.

The downlink control signaling receiving module is configured to receive downlink control signaling sent by the wireless network node, where the downlink control signaling includes a second index, and the second index indicates a level in an MCS table used by the wireless device during data transmission.

The information transmission apparatus of this embodiment is based on the same inventive concept as the information transmission method of any previous embodiment. For technical details not described in this embodiment, see any previous embodiment. This embodiment has the same beneficial effects as the performed information transmission method.

FIG. 5 is a diagram illustrating the structure of an information transmission apparatus according to an embodiment. The apparatus is applied to a wireless network node. As shown in FIG. 5, the apparatus includes a sending module 510.

The sending module 510 is configured to send configuration information of a modulation and coding scheme (MCS) table set to enable the wireless device to configure the MCS table set according to the configuration information, where the wireless network node generates the MCS table set.

In the information transmission apparatus of this embodiment of the present application, the wireless network node adaptively generates the MCS table set and sends configuration information of the MCS table set to the wireless device. The wireless device can configure the MCS table set according to the configuration information and perform data transmission according to the configured MCS table set. Data transmission between the wireless network node and the wireless device is performed according to the adaptively generated MCS table set so that the spectral efficiency of data transmission between the wireless network node and the wireless device can be optimized, thereby improving the utilization of spectrum resources.

In an embodiment, generating the MCS table set includes generating the MCS table set according to air interface wireless channel information.

The MCS table set includes at least one MCS table. Each MCS table includes at least one level of quantized modulation order and quantized target code rate.

In an embodiment, the MCS table set includes at least one of the following: an uplink MCS table set; a downlink MCS table set; or a sidelink MCS table set.

In an embodiment, generating the MCS table set includes generating the MCS table set according to a communication application scenario.

The MCS table set includes at least one MCS table. Each MCS table includes at least one level of quantized modulation order and quantized target code rate.

In an embodiment, generating the MCS table set includes generating the MCS table set according to a communication application scenario and air interface wireless channel information.

The MCS table set includes at least one MCS table. Each MCS table includes at least one level of quantized modulation order and quantized target code rate.

In an embodiment, generating the MCS table set according to the communication application scenario and the air interface wireless channel information includes inputting vectors corresponding to the communication application scenario and the air interface wireless channel information into a deep neural network, where the deep neural network outputs probabilities of multiple candidate MCS table sets; and comparing the probabilities of the candidate MCS table sets and selecting the MCS table set with the highest probability as the MCS table set configured for the wireless device.

In an embodiment, the air interface wireless channel information includes at least one of channel state indication (CSI) information or wireless channel estimation.

In an embodiment, the communication application scenario includes at least one of enhanced mobile broadband (eMBB); ultra-reliable low latency communications (URLLC); or massive machine-type communications (mMTC).

In an embodiment, the apparatus also includes a capability information receiving module.

The capability information receiving module is configured to receive capability information reported by the wireless device, where the capability information indicates whether the wireless device supports using the MCS table set configured by the wireless network node.

In an embodiment, sending the configuration information of the MCS table set to the wireless device includes sending the configuration information of the MCS table set to the wireless device via Layer 3 signaling.

In an embodiment, the apparatus also includes a first indication information sending module.

The first indication information sending module is configured to send first indication information to the wireless device, where the first indication information includes a first index, and the first index indicates an MCS table used by the wireless device during data transmission.

In an embodiment, the apparatus also includes a downlink control signaling sending module.

The downlink control signaling sending module is configured to send downlink control signaling to the wireless device, where the downlink control signaling includes a second index, and the second index indicates a level in an MCS table used by the wireless device during data transmission.

The information transmission apparatus of this embodiment is based on the same inventive concept as the information transmission method of any previous embodiment. For technical details not described in this embodiment, see any previous embodiment. This embodiment has the same beneficial effects as the performed information transmission method.

Embodiments of the present application also provide a communication node. FIG. 6 is a diagram illustrating the structure of hardware of a communication node according to an embodiment. As shown in FIG. 6, the communication node of the present application includes a memory 620, a processor 610, and a computer program stored in the memory and executable by the processor, where the processor 610 executes the computer program to perform the preceding information transmission method.

The communication node may further include the memory 620. One or more processors 610 may be provided in the communication node, and one processor 610 is shown as an example in FIG. 6. The memory 620 is configured to store one or more programs which, when executed by the one or more processors 610, cause the one or more processors 610 to perform the information transmission method in the embodiments of the present application.

The communication node also includes a communication apparatus 630, an input apparatus 640, and an output apparatus 650.

The processor 610, the memory 620, the communication apparatus 630, the input apparatus 640, and the output apparatus 650 in the communication node may be connected via a bus or in other manners, and the connection via a bus is shown as an example in FIG. 6.

The input apparatus 640 may be configured to receive inputted digital or character information and generate key signal input related to user settings and function control of the communication node. The output apparatus 650 may include a display device such as a display screen.

The communication apparatus 630 may include a receiver and a sender. The communication apparatus 630 is configured to perform information transceiving communication under the control of the processor 610.

As a computer-readable storage medium, the memory 620 may be configured to store software programs, computer-executable programs and modules, such as program instructions/modules (for example, the receiving module 410 and the configuration module 420 in the information transmission apparatus or the sending module 510 in the information transmission apparatus) corresponding to the information transmission method according to embodiments of the present application. The memory 620 may include a program storage region and a data storage region, where the program storage region may store an operating system and an application program required by at least one function, and the data storage region may store data and the like created according to the use of the communication node. Additionally, the memory 620 may include a high-speed random-access memory and may also include a nonvolatile memory such as at least one disk memory, a flash memory, or another nonvolatile solid-state memory. In some examples, the memory 620 may also include memories remote relative to the processor 610 and accessible to the communication node via a network. Examples of the network include, but are not limited to, the Internet, an intranet, a local area network, a mobile communication network, and a combination thereof.

An embodiment of the present application provides a storage medium storing a computer program which, when executed by a processor, causes the processor to perform the information transmission method of any previous embodiment.

Optionally, the information transmission method is applied to a wireless device and includes receiving configuration information of a modulation and coding scheme (MCS) table set sent by a wireless network node, where the MCS table set is generated by the wireless network node; and configuring the MCS table set according to the configuration information.

Optionally, the information transmission method is applied to a wireless network node and includes sending configuration information of a modulation and coding scheme (MCS) table set to a wireless device to enable the wireless device to configure the MCS table set according to the configuration information, where the wireless network node generates the MCS table set.

A computer storage medium according to the embodiments of the present application may be one computer-readable medium or any combination of multiple computer-readable media. The computer-readable medium may be a computer-readable signal medium or a computer-readable storage medium. For example, the computer-readable storage medium may be, but is not limited to, an electrical, magnetic, optical, electromagnetic, infrared, or semiconductor system, apparatus, or device or any combination thereof. More specific examples of the computer-readable storage medium include (non-exhaustive list): an electrical connection having one or more wires, a portable computer magnetic disk, a hard disk, a random-access memory (RAM), a read-only memory (ROM), an erasable programmable read-only memory (EPROM), a flash memory, an optical fiber, a portable compact disc read-only memory (CD-ROM), an optical storage element, a magnetic storage device, or any suitable combination thereof. The computer-readable storage medium may be any tangible medium including or storing a program. The program may be used by or used in conjunction with an instruction execution system, apparatus, or device.

The computer-readable signal medium may include a data signal propagated in a baseband or as part of a carrier. The data signal carries computer-readable program codes. The data signal propagated in this manner may be in multiple forms, including, but not limited to, an electromagnetic signal, an optical signal, or any suitable combination thereof. The computer-readable signal medium may be any computer-readable medium other than the computer-readable storage medium. The computer-readable medium may send, propagate, or transmit a program used by or used in conjunction with an instruction execution system, apparatus, or device.

Program codes included in the computer-readable medium may be transmitted by any suitable medium including, but not limited to, a wireless medium, a wire, an optical cable, a radio frequency (RF), or any suitable combination thereof.

Computer program codes for performing operations of the present application may be written in one or more programming languages or a combination thereof. The programming languages include object-oriented programming languages such as Java, Smalltalk, and C++ and may further include conventional procedural programming languages such as "C" and similar programming languages. Program codes may be executed entirely on a user computer, executed partly on a user computer, executed as a standalone software package, executed partly on a user computer and partly on a remote computer, or executed entirely on a remote computer or a server. In the case where the remote computer is involved, the remote computer may be connected to the user computer via any type of network including a local area network (LAN) or a wide area network (WAN) or may be connected to an external computer (for example, via the Internet provided by an Internet service provider).

Example embodiments of the present application are described above and are not intended to limit the scope of the present application.

It is to be understood by those skilled in the art that the term "user equipment" encompasses any appropriate type of wireless user device, such as a mobile phone, a portable data processing apparatus, a portable web browser, or a vehicle-mounted mobile station.

Generally speaking, embodiments of the present application may be implemented in hardware or special-purpose circuits, software, logic, or any combination thereof. For example, some aspects may be implemented in hardware while other aspects may be implemented in firmware or software executable by a controller, a microprocessor, or another computing apparatus, though the present application is not limited thereto.

Embodiments of the present application may be implemented through the execution of computer program instructions by a data processor of a mobile apparatus, for example, implemented in a processor entity, by hardware, or by a combination of software and hardware. The computer program instructions may be assembly instructions, instruction set architecture (ISA) instructions, machine instructions, machine-related instructions, microcodes, firmware instructions, status setting data, or source or object codes written in any combination of one or more programming languages.

A block diagram of any logic flow among the drawings of the present application may represent program steps, may represent interconnected logic circuits, modules, and functions, or may represent a combination of program steps and logic circuits, modules, and functions. Computer programs may be stored in a memory. The memory may be of any type suitable for a local technical environment and may be implemented using any suitable data storage technology, such as, but not limited to, a read-only memory (ROM), a random-access memory (RAM), or an optical memory apparatus and system (for example, a digital video disc (DVD) or a compact disc (CD)). Computer-readable media may include non-transitory storage media. The data processor may be of any type suitable for the local technical environment, such as, but not limited to, a general-purpose computer, a special-purpose computer, a microprocessor, a digital signal processor (DSP), an application-specific integrated circuit (ASIC), a field-programmable gate array (FPGA), and a processor based on a multi-core processor architecture.

The detailed description of example embodiments of the present application is provided above through exemplary and non-limiting examples. However, considering the drawings and the claims, various modifications and adjustments to the preceding embodiments are apparent to those skilled in the art and do not deviate from the scope of the present application. Accordingly, the proper scope of the present application is determined according to the claims.

## Claims

1. An information transmission method, applied to a wireless device, comprising:
receiving configuration information of a modulation and coding scheme (MCS) table set sent by a wireless network node, wherein the MCS table set is generated by the wireless network node; and
configuring the MCS table set according to the configuration information.

2. The information transmission method of claim 1, further comprising:
reporting capability information to the wireless network node, wherein the capability information indicates whether the wireless device supports using the MCS table set configured by the wireless network node.

3. The information transmission method of claim 1, wherein receiving the configuration information of the MCS table set sent by the wireless network node comprises:
receiving, via Layer 3 signaling, the configuration information of the MCS table set sent by the wireless network node.

4. The information transmission method of claim 1, further comprising:
receiving first indication information sent by the wireless network node, wherein the first indication information comprises a first index, and the first index indicates an MCS table used by the wireless device during data transmission.

5. The information transmission method of claim 1, further comprising:
receiving downlink control signaling sent by the wireless network node, wherein the downlink control signaling comprises a second index, and the second index indicates a level in an MCS table used by the wireless device during data transmission.

6. An information transmission method, applied to a wireless network node, comprising:
sending configuration information of a modulation and coding scheme (MCS) table set to a wireless device to enable the wireless device to configure the MCS table set according to the configuration information, wherein the wireless network node generates the MCS table set.

7. The information transmission method of claim 6, wherein generating the MCS table set comprises:
generating the MCS table set according to air interface wireless channel information;
wherein the MCS table set comprises at least one MCS table, and each MCS table comprises at least one level of quantized modulation order and quantized target code rate.

8. The information transmission method of claim 7, wherein the MCS table set comprises at least one of the following:
an uplink MCS table set; a downlink MCS table set; or a sidelink MCS table set.

9. The information transmission method of claim 6, wherein generating the MCS table set comprises:
generating the MCS table set according to a communication application scenario;
wherein the MCS table set comprises at least one MCS table, and each MCS table comprises at least one level of quantized modulation order and quantized target code rate.

10. The information transmission method of claim 6, wherein generating the MCS table set comprises:
generating the MCS table set according to a communication application scenario and air interface wireless channel information;
wherein the MCS table set comprises at least one MCS table, and each MCS table comprises at least one level of quantized modulation order and quantized target code rate.

11. The information transmission method of claim 10, wherein generating the MCS table set according to the communication application scenario and the air interface wireless channel information comprises:
inputting vectors corresponding to the communication application scenario and the air interface wireless channel information into a deep neural network, wherein the deep neural network outputs probabilities of a plurality of candidate MCS table sets; and
comparing the probabilities of the plurality of candidate MCS table sets and selecting an MCS table set with a highest probability as the MCS table set configured for the wireless device.

12. The information transmission method of any one of claims 7 to 8 or 10 to 11, wherein the air interface wireless channel information comprises at least one of:
channel state indication (CSI) information or wireless channel estimation.

13. The information transmission method of any one of claims 9 to 11, wherein the communication application scenario comprises at least one of:
enhanced mobile broadband (eMBB); ultra-reliable low latency communications (URLLC); or massive machine-type communications (mMTC).

14. The information transmission method of claim 6, further comprising:
receiving capability information reported by the wireless device, wherein the capability information indicates whether the wireless device supports using the MCS table set configured by the wireless network node.

15. The information transmission method of claim 6, wherein sending the configuration information of the MCS table set to the wireless device comprises:
sending the configuration information of the MCS table set to the wireless device via Layer 3 signaling.

16. The information transmission method of claim 6, further comprising:
sending first indication information to the wireless device, wherein the first indication information comprises a first index, and the first index indicates an MCS table used by the wireless device during data transmission.

17. The information transmission method of claim 6, further comprising:
sending downlink control signaling to the wireless device, wherein the downlink control signaling comprises a second index, and the second index indicates a level in an MCS table used by the wireless device during data transmission.

18. An information transmission apparatus, applied to a wireless device, comprising:
a receiving module configured to receive configuration information of a modulation and coding scheme (MCS) table set sent by a wireless network node, wherein the MCS table set is generated by the wireless network node; and
a configuration module configured to configure the MCS table set according to the configuration information.

19. An information transmission apparatus, applied to a wireless network node, comprising:
a sending module configured to send configuration information of a modulation and coding scheme (MCS) table set to enable the wireless device to configure the MCS table set according to the configuration information, wherein the wireless network node generates the MCS table set.

20. A communication node, comprising a memory, a processor, a program stored in the memory and executable on the processor, and a data bus for implementation of connection and communication between the processor and the memory, wherein when executed by the processor, the program causes the processor to perform the information transmission method of any one of claims 1 to 17.

21. A storage medium for computer-readable storage, wherein the storage medium stores at least one program executable by at least one processor to cause the at least one processor to perform the information transmission method of any one of claims 1 to 17.
